# FASCICULE DE BREVET EUROPEEN

(11) **EP 1 965 243 B1**
(45) Date de publication et mention de la délivrance du brevet: **27.10.2010**
(21) Numéro de dépôt: 08290155.4
(22) Date de dépôt: 18.02.2008
(51) Int. Cl.: G02B 26/08, G02B 7/185, H01L 41/09

(54) **Miroir adaptatif piézoélectrique**
Piezoelektrischer adaptativer Spiegel
Piezoelectric adaptive mirror

(30) Priorité: 28.02.2007 FR 0701439
(43) Date de publication de la demande: 03.09.2008
(73) Titulaire: COMPAGNIE INDUSTRIELLE DES LASERS CILAS, 45100 Orléans (FR)
(72) Inventeur: Sinquin, Jean-Christophe, 91760 Itteville (FR); Lurçon, Jean-Marie, 91620 Nozay (FR); Guillemard, Claude, 91340 Ollainville (FR)
(74) Mandataire: Bonnetat, Christian

(56) Documents cités:
- EP-A- 0 936 684
- EP-A- 1 408 561
- EP-A1- 0 793 120
- EP-A1- 1 432 048
- JP-A- 2005 043 544
- US-A1- 2003 001 454

## Description

La présente invention concerne un miroir adaptatif, c'est-à-dire un miroir déformable, destiné à être disposé dans une chaîne optique pour corriger en temps réel la déformation du front d'une onde incidente et, donc, maintenir ladite chaîne optique à sa performance optimale.

Par exemple, par le document EP-0 793 120, on connaît déjà un miroir adaptatif comportant :
- une pluralité d'actionneurs piézoélectriques, en forme de barreaux, solidaires d'une base rigide par une de leurs extrémités et pourvus d'électrodes grâce auxquelles des tensions électriques peuvent être appliquées auxdits actionneurs piézoélectriques pour y engendrer des champs électriques ; et
- une surface réfléchissante souple, portée par l'autre des extrémités desdits actionneurs piézoélectriques et apte à être localement déformée par chacun de ceux-ci dont la longueur varie sous l'action desdits champs électriques.

Par ailleurs, on sait que la variation de dimension d'un bloc de matière piézoélectrique, parallèlement à la direction du champ électrique qui lui est appliqué, dépend de la tension électrique engendrant ledit champ, mais est indépendante de cette dimension.

Aussi, dans le miroir adaptatif connu rappelé ci-dessus, afin d'obtenir une course satisfaisante pour l'extrémité de chaque barreau piézoélectrique reliée à ladite surface réfléchissante souple à déformer, on est obligé de constituer ledit barreau par un empilement d'une pluralité d'éléments piézoélectriques dont chacun est pourvu d'une paire d'électrodes, de façon que la course dudit barreau puisse être égale à la somme des variations d'épaisseur desdits éléments.

Ainsi, la course de tels barreaux piézoélectriques composites est d'autant plus grande que le nombre d'éléments est lui-même plus grand. Toutefois, si le nombre d'éléments empilés est élevé, il est nécessaire que lesdits éléments empilés présentent une large surface pour assurer une assise satisfaisante auxdits barreaux composites. Il est alors impossible d'obtenir un faible pas de répartition desdits barreaux piézoélectriques sur ladite base rigide.

Dans ces miroirs adaptatifs connus, on doit donc respecter un compromis entre la course et le pas de répartition désirés pour les barreaux. Dans la pratique, le pas de répartition minimal que l'on puisse obtenir est de l'ordre de 3 mm, pour une course de l'ordre de quelques micromètres.

Or, de nombreuses applications d'optique adaptative exigent des pas de répartition des barreaux piézoélectriques de l'ordre de 1 mm, pour une course également de l'ordre de quelques micromètres.

L'objet de la présente invention est de remédier aux inconvénients de la technique antérieure et de permettre la réalisation de miroirs adaptatifs dans lesquels le pas de répartition des barreaux piézoélectriques est faible, ces derniers présentant cependant une course appropriée.

A cette fin, selon l'invention, le miroir adaptatif du type décrit ci-dessus est remarquable en ce que :
- il comporte une pluralité de peignes monolithiques de matière piézoélectrique accolés et solidarisés les uns des autres, chaque peigne comportant des dents formant des barreaux monolithiques et un dos formant une tranche de ladite base ; et
- chaque barreau monolithique de matière piézoélectrique est pourvu, sur des faces longitudinales opposées, de deux électrodes pour former l'un desdits actionneurs.

Ainsi, dans la présente invention, grâce à la réalisation des barreaux sous forme de dents de peignes monolithiques, on peut donner à ces barreaux une section inférieure à celle des barreaux composites de la technique antérieure, pour des courses du même ordre, notamment du fait que lesdits barreaux monolithiques présentent une bonne rigidité.

Dans la présente invention, on met donc en oeuvre l'effet piézoélectrique transverse, au contraire de la technique antérieure connue à barreaux composites qui utilise l'effet piézoélectrique direct.

On remarquera que le document EP-1 432 048 décrit déjà un actionneur piézoélectrique utilisant l'effet piézoélectrique transverse et constitué d'une matrice de barreaux monolithiques piézoélectriques. Toutefois, dans ce document, chacun desdits barreaux est fixé sur la base par l'intermédiaire de moyens de fixation, ce qui limite les possibilités de réduire le pas de répartition desdits barreaux.

Dans le miroir conforme à la présente invention, la matrice des barreaux monolithiques est simplement formée par assemblage, par exemple par collage, des dos d'une pluralité de peignes monolithiques.

De préférence, des entretoises électriquement isolantes sont disposées entre lesdits peignes monolithiques adjacents et lesdits barreaux monolithiques présentent une section carrée.

On remarquera de plus que l'architecture dudit miroir adaptatif selon l'invention est particulièrement simple puisque chaque actionneur est monolithique et ne comporte qu'une seule paire d'électrodes, alors que chaque actionneur de la technique antérieure est constitué d'un empilement d'une pluralité d'éléments piézoélectriques et comporte donc une encore plus grande pluralité d'électrodes.

Les figures du dessin annexé feront bien comprendre comment l'invention peut être réalisée. Sur ces figures, des références identiques désignent des éléments semblables.

La figure 1 est un schéma électrique permettant d'expliquer l'effet piézoélectrique direct et l'effet piézoélectrique transverse.

La figure 2 est un schéma illustrant la structure de miroirs adaptatifs piézoélectriques connus.

La figure 2A est un agrandissement d'une partie de la figure 2.

La figure 3 est une vue de face d'un peigne monolithique conforme à la présente invention.

La figure 4 est un schéma illustrant la structure du miroir adaptatif piézoélectrique conforme à la présente invention.

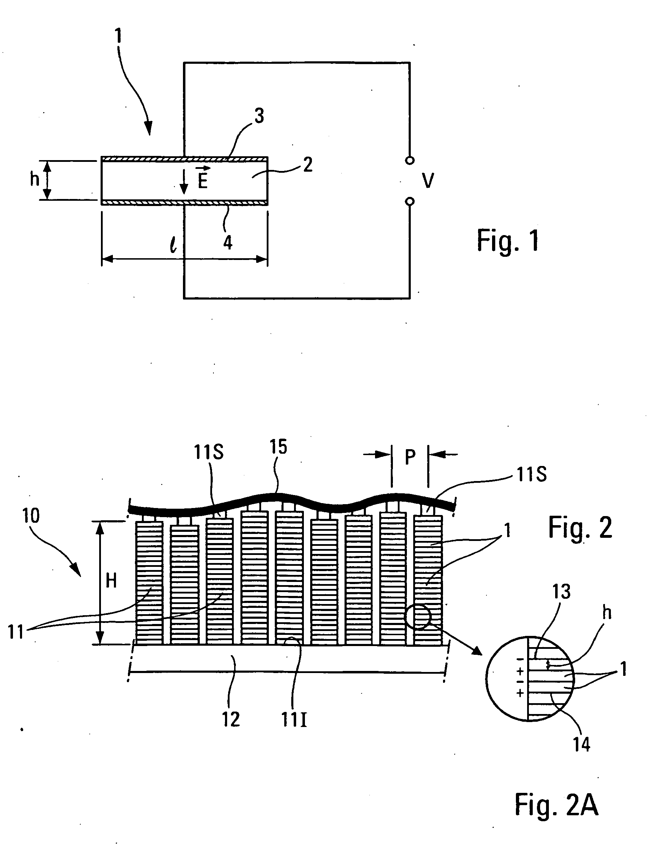

L'élément piézoélectrique 1, représenté en coupe sur la figure 1, comporte une plaquette monolithique 2 de matière piézoélectrique sur deux faces opposées de laquelle sont disposées deux électrodes parallèles opposées 3 et 4. La hauteur de la plaquette 2, portant la référence h, correspond à la distance entre lesdites électrodes 3 et 4. La plaquette 2 présente une section de longueur ℓ et de largeur x. Cette largeur x, orthogonale au plan de la figure 1, n'est pas visible sur celle-ci.

Si, entre les électrodes opposées 3 et 4, on applique une tension électrique V, il en résulte que la plaquette 2 est soumise à un champ électrique E̅ de direction orthogonale auxdites électrodes 3, 4.

Parallèlement à la hauteur h, la plaquette subit alors, sous l'effet piézoélectrique direct, une variation de hauteur dh telle que dh/h=d₃₃E, expression dans laquelle d₃₃ désigne le coefficient de charge direct de la matière piézoélectrique de la plaquette 2.

Or, l'amplitude E du champ E̅ est égale à V/h, de sorte que dh est égale au produit d₃₃V.

Ainsi, la variation dh de la hauteur h sous l'effet de la tension électrique V est une fonction croissante de cette tension V, mais est indépendante de la hauteur h.

Sur la figure 2, on a représenté schématiquement un miroir adaptatif 10, de type connu, comportant :
- une pluralité d'actionneurs piézoélectriques 11 en forme de barreaux de hauteur H, par exemple agencés en matrice, solidaires d'une base rigide 12 par une de leurs extrémités 11I et pourvus d'électrodes 13, 14 grâce auxquelles des tensions électriques peuvent être appliquées auxdits actionneurs piézoélectriques 11 pour y engendrer des champs électriques ; et
- une surface réfléchissante souple 15, portée par l'autre extrémité 11 S desdits actionneurs piézoélectriques 11 et apte à être localement déformée par chacun de ces derniers, dont la hauteur varie sous l'action desdits champs électriques.

Pour que le miroir adaptatif 10 soit opérationnel, il est indispensable que la variation de hauteur dH de chaque actionneur piézoélectrique 11 soit suffisamment grande. Or, comme on l'a vu ci-dessus en regard de la figure 1, la variation de hauteur d'un bloc de matière piézoélectrique par effet piézoélectrique direct est indépendante de la hauteur de ce bloc.

Aussi, pour obtenir une grande variation de hauteur dH désirée, de façon connue, on forme chaque actionneur piézoélectrique 11 par l'empilement d'un nombre élevé N d'éléments piézoélectriques identiques, semblables à l'élément 1. Les électrodes 13, 14 sont alors formées par la pluralité des électrodes 3, 4 desdits éléments constitutifs 1. Ainsi, la hauteur H de chaque actionneur 11 est égale à Nh et la variation de hauteur dH de chaque actionneur piézoélectrique 11 peut être égale à N fois la valeur de la variation de hauteur dh d'un élément constitutif 1. En choisissant convenablement N, on peut donc obtenir une variation dH suffisamment grande, telle que désirée.

Toutefois, pour que l'assise des empilements d'éléments 1 soit bonne et que la solidité des actionneurs 11 soit satisfaisante, il est indispensable de donner à chaque élément 1 une surface importante (cette surface étant déterminée d'une part par la longueur ℓ et d'autre part par la dimension x qui est alors au moins approximativement égale à ℓ, de sorte que le pas de répartition P des actionneurs 11 sur la base rigide 12 ne peut en pratique être inférieur à 3 mm, ce qui n'est pas suffisamment petit pour de nombreuses applications du miroir 10.

Comme indiqué ci-dessus, l'un des objets de l'invention est de permettre d'abaisser la valeur de ce pas de répartition P.

Dans la présente invention, on profite du fait que, lorsqu'on applique la tension électrique V à la plaquette piézoélectrique 2 par l'intermédiaire des électrodes 3 et 4 (voir la figure 1), non seulement la hauteur h subit une variation dh=d₃₃V par suite de l'effet piézoélectrique direct, mais encore la longueur ℓ subit une variation dℓ par l'effet piézoélectrique transverse. Cette variation de longueur dℓ, due à l'effet piézoélectrique transverse, est telle que dℓ/ℓ=d₃₁E=d₃₁V/h, expression dans laquelle d₃₁ est le coefficient de charge transverse de la matière piézoélectrique.

Certes, ce coefficient de charge transverse d₃₁ est inférieur au coefficient de charge direct d₃₃ (généralement d₃₁ est au plus égal à la moitié de d₃₃, en fonction de la matière piézoélectrique de la plaquette 2), mais il est important de remarquer de ce qui précède que dℓ = d₃₁ℓV/h, c'est-à-dire que la variation de longueur dℓ due à l'effet piézoélectrique transverse est une fonction croissante non seulement de la tension électrique V, mais encore de la longueur ℓ, et est une fonction décroissante de la hauteur h.

Ainsi, malgré la faible valeur du coefficient de charge transverse d₃₁, il est possible d'obtenir une variation de longueur dℓ d'amplitude satisfaisante en choisissant ℓ et V suffisamment grands et h suffisamment petit.

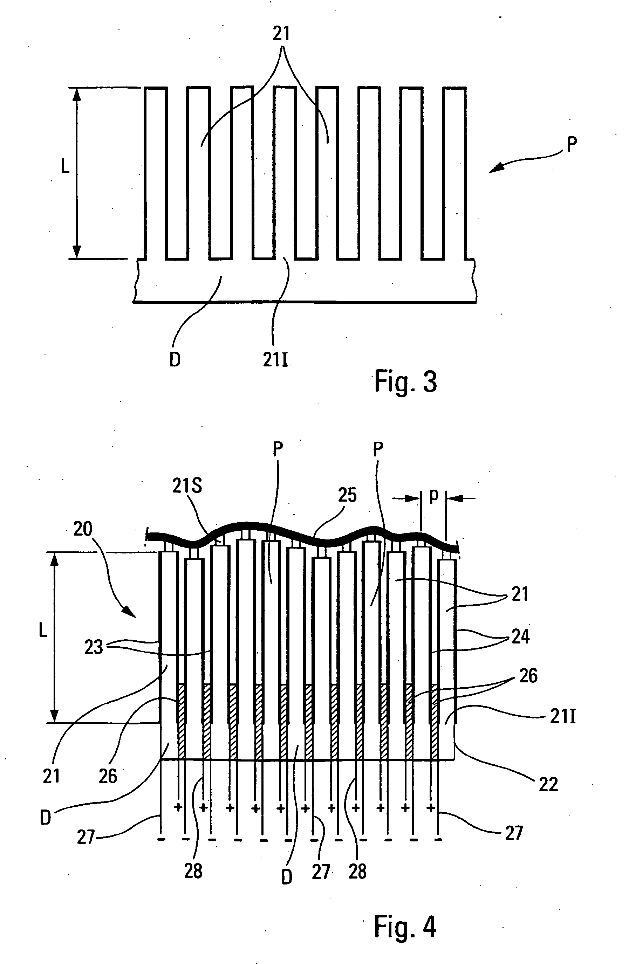

La présente invention fait application des remarques ci-dessus. En effet, le miroir adaptatif 20 conforme à la présente invention et représenté sur la figure 4 est remarquable en ce que :
- il comporte une pluralité de peignes monolithiques P, identiques et rectangulaires, réalisés en une matière piézoélectrique (un tel peigne est montré par la figure 3), dont chaque dent forme un barreau monolithique 21 dont l'une des extrémités 21I est solidaire du dos D du peigne correspondant. Lesdits barreaux 21 présentent par exemple une section carrée (h=x). La valeur L de la longueur ℓ desdits barreaux 21 est choisie pour obtenir une variation de longueur dL=d₃₁LV/h désirée ;
- les peignes monolithiques P sont rendus solidaires les uns des autres par leurs dos D accolés pour former une base 22. Ainsi, chaque dos D forme une tranche de ladite base 22. Après solidarisation, par exemple par collage, desdits peignes P, lesdits barreaux monolithiques 21 des différents peignes sont agencés en lignes et en colonnes pour former une matrice ;
- chaque barreau monolithique 21 est pourvu de deux électrodes 23 et 24 (semblables aux électrodes 3 et 4 ci-dessus) disposées sur des faces longitudinales opposées dudit barreau ; et
- une surface réfléchissante souple 25 est portée par l'autre extrémité 21 S des barreaux 21, pour être localement déformée par chacun de ceux-ci lorsque leur longueur L varie.

Par ailleurs, entre les peignes monolithiques P adjacents sont interposées des entretoises électriquement isolantes 26 permettant d'isoler chaque électrode 23 d'un barreau de l'électrode 24 en regard d'un barreau 21 adjacent.

Avantageusement, les contacts 27, 28 des électrodes 23, 24 traversent la base 22 pour être accessibles du côté de celle-ci opposé auxdits barreaux monolithiques 21.

On comprendra aisément que les barreaux monolithiques 21 peuvent présenter, sans nuire à leur solidité, des sections hx plus faibles que la section ℓx des barreaux composites 11. Le pas de répartition p des barreaux monolithiques 21 peut donc être plus petit que le pas de répartition P des barreaux composites 11.

Dans un exemple particulier de réalisation, on a utilisé, pour la réalisation des peignes monolithiques P, une matière piézoélectrique dont le coefficient de charge transverse d₃₁ est égal à 1,3.10⁻¹⁰ mètres par volt. La tension électrique V a été choisie égale à ± 400 volts. Les barreaux monolithiques 21 présentaient une section hx carrée avec h = x = 0,7 mm et la longueur L était égale à 20 mm. On calcule alors aisément que dL est comprise entre -1,5 micromètres et +1,5 micromètres, ce qui offre une course totale de 3 micromètres.

En choisissant des entretoises 26 de 0,3 mm, le pas p est égal à 1 mm.

## Revendications

1. Miroir adaptatif (20) comportant :
- une pluralité d'actionneurs piézoélectriques, en forme de barreaux, solidaires d'une base rigide (22) par une de leurs extrémités et pourvus d'électrodes grâce auxquelles des tensions électriques peuvent être appliquées auxdits actionneurs piézoélectriques pour y engendrer des champs électriques ; et
- une surface réfléchissante souple (25), portée par l'autre (21 S) des extrémités desdits actionneurs piézoélectriques et apte à être localement déformée par chacun de ceux-ci dont la longueur varie sous l'action desdits champs électriques,
**caractérisé en ce que** :
- ledit miroir adaptatif (20) comporte une pluralité de peignes monolithiques (P) de matière piézoélectrique accolés et solidarisés les uns des autres, chaque peigne comportant des dents formant des barreaux monolithiques (21) et un dos (D) formant une tranche de ladite base (22) ; et
- chaque barreau monolithique (21) de matière piézoélectrique est pourvu, sur des faces longitudinales opposées, de deux électrodes (23, 24) pour former l'un desdits actionneurs.

2. Miroir adaptatif selon la revendication 1,
**caractérisé en ce que** lesdits barreaux monolithiques (21) présentent une section carrée.

3. Miroir adaptatif selon l'une des revendications 1 ou 2,
**caractérisé en ce que** des entretoises électriquement isolantes (26) sont disposées entre des peignes monolithiques adjacents.

4. Miroir adaptatif selon l'une des revendications 1 à 3,
**caractérisé en ce que** les contacts (27, 28) des électrodes (23, 24) desdits barreaux monolithiques (21) traversent ladite base (22) pour être accessibles du côté de cette dernière opposé auxdits barreaux monolithiques (21).

## Claims

1. An adaptive mirror (20) comprising:
- a plurality of bar-shaped piezoelectric actuators joined to a rigid base (22) by one of their ends and provided with electrodes in virtue of which electrical voltages can be applied to said piezoelectric actuators to generate electric fields therein; and
- a flexible reflecting surface (25), borne by the other (21S) of the ends of said piezoelectric actuators and able to be locally deformed by each of these, the length of which varies under the action of said electric fields,
**Characterized in that**:
- said adaptive mirror (20) comprises a plurality of monolithic combs (P) of piezoelectric material placed side by side and attached to one another, each comb comprising teeth forming monolithic bars (21) and a back (D) forming a slice of said base (22); and
- each monolithic bar (21) of piezoelectric material is provided with two electrodes (23, 24) on opposing longitudinal faces to form one of said actuators.

2. The adaptive mirror as claimed in claim 1, **Characterized in that** said monolithic bars (21) are square in section.

3. The adaptive mirror as claimed in either of claims 1 or 2, **Characterized in that** electrically insulating spacers (26) are arranged between adjacent monolithic combs.

4. The adaptive mirror as claimed in one of claims 1 to 3, **Characterized in that** the contacts (27, 28) of the electrodes (23, 24) of said monolithic bars (21) cross said base (22) so as to be accessible from the side of the latter opposite said monolithic bars (21).

## Patentansprüche

1. Adaptativer Spiegel (20), der Folgendes aufweist:
- mehrere piezoelektrische Betätigungselemente in Form von Stangen, die solidarisch mit einer starren Basis (22) über eines ihrer Enden verbunden und mit Elektroden versehen sind, dank welchen elektrische Spannungen an die piezoelektrischen Betätigungselemente angelegt werden können, um in ihnen elektrische Felder zu erzeugen; und
- eine biegsame reflektierende Fläche (25), die von dem anderen (21S) der Enden der piezoelektrischen Betätigungselemente getragen wird und lokal von jedem dieser, dessen Länge unter der Einwirkung der elektrischen Felder variiert, verformt werden kann,
**dadurch gekennzeichnet, dass**:
- der adaptative Spiegel (20) mehrere monolithische Kämme (P) aus piezoelektrischem Werkstoff aufweist, die aneinander liegen und solidarisch miteinander verbunden sind, wobei jeder Kamm Zähne aufweist, die monolithische Stangen (21) bilden, und einen Rücken (D), der eine Kante der Basis (22) bildet; und
- jede monolithische Stange (21) aus piezoelektrischem Material auf entgegengesetzten Längsseiten mit zwei Elektroden (23, 24) versehen ist, um einen der Betätigungselemente zu bilden

2. Adaptativer Spiegel nach Anspruch 1,
**dadurch gekennzeichnet, dass** die monolithischen Stangen (21) einen quadratischen Querschnitt aufweisen.

3. Adaptativer Spiegel nach einem der Ansprüche 1 oder 2,
**dadurch gekennzeichnet, dass** elektrisch isolierende Abstandshalter (26) zwischen den benachbarten monolithischen Kämmen angeordnet sind.

4. Adaptativer Spiegel nach einem der Ansprüche 1 bis 3,
**dadurch gekennzeichnet, dass** die Kontakte (27, 28) der Elektroden (23, 24) der monolithischen Stangen (21), die Basis (22) durchqueren, um auf der Seite dieser Letzteren, die den monolithischen Stangen (21) entgegengesetzt ist, zugänglich zu sein.
